Europäisches Patentamt

European Patent Office

Office européen des brevets

(19)

(11) Publication number: 0 239 092 B1

# EUROPEAN PATENT SPECIFICATION

(12)

(45) Date of publication of patent specification: 08.06.94

(51) Int. Cl.⁵: **B32B 27/30**, B32B 27/34, B32B 27/08

(21) Application number: 87104395.6

(22) Date of filing: 25.03.87

The file contains technical information submitted after the application was filed and not included in this specification

(54) **Multilayered structure using ethylene-vinyl alcohol copolymer.**

(30) Priority: 26.03.86 JP 69586/86

(43) Date of publication of application:
30.09.87 Bulletin 87/40

(45) Publication of the grant of the patent:
08.06.94 Bulletin 94/23

(84) Designated Contracting States:
BE DE FR GB IT NL SE

(56) References cited:
EP-A- 0 086 058
EP-A- 0 115 163
FR-A- 2 335 407

DATABASE WPIL, abstract no. 79-57146B,
Derwent Publications Ltd, London, GB; & JP-
A-54 078 749

Polymer Science Dictionary, Mark S.M. Al-
ger, Elsevier Applied Science (1989) pages
288-292

(73) Proprietor: **KURARAY CO., LTD.**
1621 Sakazu
Kurashiki-City Okayama Prefecture 710(JP)

(72) Inventor: **Negi, Taichi**
131-1, Yasue
Kurashiki-City(JP)
Inventor: **Hirofuji, Satoshi**
1652-2, Sakazu
Kurashiki-City(JP)
Inventor: **Tanaka, Nobuo**
11-23, Shishigaguchi-cho
Nishinomiya-City(JP)
Inventor: **Kawai, Syuji**
3-5, Height
Kurashiki-City(JP)

(74) Representative: **VOSSIUS & PARTNER**
Postfach 86 07 67
D-81634 München (DE)

## Description

The present invention relates to a hot drawn, multilayered structure having a layer of a composition comprising an ethylene-vinyl alcohol copolymer (hereinafter referred to as EVOH) and more particularly, to a multilayered structure hot drawn at a high speed which has neither pinholes nor cracks, nor non-uniform sections, and possesses excellent gas barrier properties.

EVOH has been found to lend itself to films for wrapping e.g. foodstuffs, especially foodstuffs where that wrapping needs to have barrier properties against oxygen, or other products whose flavor is to be preserved. However, a film composed of EVOH alone is not tough enough nor does it possess effective barrier properties against water and moisture.

In order to overcome these drawbacks, EVOH has been used in the form of a multilayered structure obtained by laminating a thermoplastic resin such as polypropylene and polystyrene, and various heat sealant layers represented by ionomers and ethylene-vinyl acetate copolymers.

If multilayered structures (films, sheets, parisons, etc.) prepared by various methods are made e.g. into containers, particularly if drawing is performed at a temperature lower than the melting point of EVOH, small voids, cracks, or non-uniform sections are often formed in the EVOH layer, which seriously detracts from the oxygen barrier properties of the container formed. In addition, the appearance of such a container is not good. Therefore, EVOH can hardly be used in this form as material for e.g. foodstuff containers.

In order to prevent e.g. pinholes or cracks from forming in the EVOH layer upon hot drawing, various plasticizers have been incorporated into EVOH (JP-A-88067/78 and 20345/84), and polyamide resins have been blended with EVOH (JP-A-Nos. 141785/77 and 154755/83, 36412/83). However, the results obtained were not satisfactory. The reason therefor was that the plasticizers containing e.g. hydroxy groups and aromatic sulfonamides had to be used in an amount of 10 to 20 parts by weight per 100 parts by weight of EVOH, in order to improve the hot drawing properties. This however involved many problems such as greatly inferior gas barrier properties and less adhesion strength of the EVOH layer to other resin layers, possibly due to the bleeding of the plasticizers. Therefore, such a system was not found to be suitable.

Another known method comprises blending polyamide resins with EVOH to impart it flexibility and improve its fabrication properties. This method is the subject matter of many patent applications e.g. JP-B-24277/69 and 24813/85, JP-A-129035/83, JP-B-38897/84 and JP-A-36412/83). However, while the polyamides may improve the hot draw formability at high speed they give formed products incorporating a number of gel-like matters which might result from a rapid chemical reaction with EVOH. The polyamides are also unsatisfactory in use because of their marked coloration. Furthermore, JP-A-161453/85 and 163952/85 disclose blends of EVOH and a polyamide resin having relatively low gel content and low coloration. Hot drawing at low speed seemed to result in good products not showing cracks, pinholes and non-uniform sections. However, as suggested by the appearance of the products and verified by measurements, the values of the gas barrier properties vary greatly, probably because the system is insufficiently compatible with EVOH. Moreover, the products must be assumed to have minute pinholes hardly discernible with the naked eye. Furthermore, with the increasing speed of the hot drawing machine, the values of the gas barrier properties vary increasingly and as a result, the containers thus produced no longer possess reliable gas barrier properties.

In FR-A-2335407 there is provided a molded container having a wall composed of a thermoplastic resin oriented in at least one direction on the wall face, wherein the container wall consists essentially of a single layer of a blend composed mainly of a plurality of melt-extrudable thermoplastic resins. Each of said thermoplastic resins has a special solubility parameter and a special oxygen permeability, cf. claim 1. One of the thermoplastic resins is an ethylene-vinyl alcohol copolymer having an ethylene content of 25 to 50 mole %, cf. claim 2. Another of the thermoplastic resins includes at least one member selected from homopolyamides and copolyamides having 3 to 30 amide groups per 100 carbon atoms in the molecule, cf. claim 3. The two types of resins are beeing mixed at a weight ratio of from 90:10 to 10:90, cf. claim 8. Furthermore there is provided a container having a wall composed of a multilayer structure comprising at least one layer of a blend composed of a plurality of melt-extrudable thermoplastic resins and at least one layer composed of a moisture-resistant thermoplastic resin, cf claim 12.

Therefore, it is an important object to develop an EVOH which has good and uniform gas barrier properties, i.e. which does not form minute pinholes, cracks, non-uniform sections upon hot drawing at high speed and which therefore lends itself to the production of containers having good gas barrier properties.

As described above, EVOH has various excellent properties. However, when used in the form of a laminate with a thermoplastic resin for the production of containers or the like, the EVOH layer is liable to show cracks, pinholes, and non-uniform sections, which greatly detract from the gas barrier properties.

Thus, the present inventors have made extensive investigations to develop an EVOH composition suitable for the production of multilayered containers which have excellent gas barrier properties, because of preserving the excellent gas barrier properties possessed by EVOH and preventing e.g. cracks, pinholes and non-uniform sections from occuring in the EVOH layer, when the laminate is made e.g. into containers The inventors have thus made the present invention.

The present invention relates to a hot drawn multilayered structure and in particular to a multilayered structure hot drawn at high speed, comprising a layer of a composition comprising 70 to 95 wt% of EVOH having an ethylene content of 25 to 60 mol% and a saponification degree of at least 90% and, 5 to 30 wt% of a polyamide, which is an aliphatic copolymer containing caproamide as a main structural unit, has a ratio of the number of methylene groups to the number of amide groups satisfying the equation:

$$6.6 \leqq CH_2/NHCO \leqq 10$$

has a melting point of 110 to 180°C and shows a melt index of 0.1 to 10 g/10 min, and a thermoplastic resin layer provided on at least one surface of said layer, said thermoplastic resin being drawable in a hot drawing temperature range shown by the following equation:

$$X - 10°C \geqq Y \geqq X - 110°C$$

wherein X represents the melting point (°C) of EVOH and Y represents the hot drawing temperature.

A hot drawn multilayered structure wherein the melting point of the aliphatic copolymer polyamide is 120 to 170°C is preferred.

Various sheets having (a)thermoplastic resin layer(s) on one surface or both surfaces of the EVOH layer by means of an adhesive resin are prepared. Once the sheets are made into cups or bottles through reheating and stretching operations, it can be determined by the appearance of the containers and by measuring gas barrier properties whether the fabrication property and the gas barrier properties are good or not. Therefore, the present inventors have blended various plasticizers and polymers with EVOH and measured the fabrication property and the gas barrier properties of EVOH. A good drawn product free from cracks, pinholes and non-uniform sections seemed to have been obtained when, after a polyamide resin having a melting point of 110 to 180°C and a melt index of 0.1 to 10 g/10 min was dry blended with EVOH, fuse- blended through an extruder and pelletized, a sheet was prepared by laminating the thermoplastic resin layer(s) onto one surface of both surfaces via an adhesive resin and the sheet was reheated and drawn. However, when the gas barrier properties of the drawn product were measured, they were found to vary greatly depending upon the areas measured. Moreover, when the forming speed, i.e., the drawing speed was increased in line with recent developments in product forming techniques and when the sheet was drawn at a high speed, the gas barrier properties (mean values) deteriorated and the variations in the areas measured increased with the drawing speed. The present inventors therefore made extensive investigations with the EVOH-polyamide blend and surprisingly and unexpectedly found that a laminate obtained by laminating a thermoplastic resin layer onto a layer of an ethylene-vinyl alcohol copolymer composition obtained by blending 5 to 30 wt% of a polyamide, which is an aliphatic copolymer containing caproamide as a main structural unit, has a ratio of the number of methylene groups to the number of amide groups satisfying the equation:

$$6.6 \leqq CH_2/NHCO \leqq 10$$

has a melting point of 110 to 180°C and shows a melt index of 0.1 to 10 g/10 min (melt index measured at 190°C under a load of 2160 g in accordance with ASTM-D1238-65T) with EVOH gives containers having highly reliable gas barrier properties. That is to say, these containers have highly uniform gas barrier properties with hardly any variations in the values measured in the different areas, and show no formation of gel or hard spots that tend to form during operation over long periods of time. The inventors thus have made the present invention which will be apparent from the examples described later.

In JP-A-78749/79 at page 6, Experiment No. 10, it is described that a single-layer film of EVOH blended with an aliphatic copolymer wherein the $CH_2/NHCO$ is 7.20 showed poor drawing properties as it broke upon drawing. However, said publication does not at all disclose the finding that when a thermoplastic resin is laminated onto this blend layer and this laminate is hot drawn, especially hot drawn at a high speed, the excellent effects described above can be achieved.

It is as yet unknown why exactly the EVOH-polyamide composition layer provides greatly improved formability and gas barrier properties when it is laminated onto the thermoplastic resin layer and the laminate is hot drawn, especially hot drawn at a high speed and why it prevents minute cracks from occuring at the interface of the composition so that a container having excellent and uniform gas barrier properties can be obtained.

The present invention will be described hereinafter in more detail.

The EVOH used in the present invention is a saponified ethylene-vinyl alcohol copolymer having an ethylene content of 25 to 60 mol%, preferably 25 to 55 mol%, in which the vinyl acetate component has a saponification degree of at least 90%, preferably 95% or more. When the ethylene content decreases to less than 25 mol%, the temperature of the formed product approaches the decomposition temperature and the formed product will pose problems.

On the other hand, when the ethylene content exceeds 60 mol%, the gas barrier properties will decrease and so will the gas barrier properties of the container prepared therefrom which has a multilayered structure. The gas barrier properties are likewise insufficient when EVOH is used in which the. saponification degree of the vinyl acetate component is less than 95%, especially less than 90%, although the containers obtained from such EVOH upon hot drawing, show a minimum of or even no cracks or pinholes. This EVOH preferably has a melt index of 0.1 to 25 g/10 min, more preferably 0.3 to 20 g/min, when measured at 190°C under a load of 2160 g in accordance with ASTM-D1238-65T.

The polyamide used in the present invention is an aliphatic copolymer which contains caproamide as a main structural unit, and has a ratio of the number of methylene groups to the number of amide groups satisfying the equation: $6.6 \leq CH_2/NHCO \leq 10$, preferably, $6.8 \leq CH_2/NHCO \leq 9.5$, more preferably, $7.0 \leq CH_2/NHCO \leq 9.5$, most preferably, $7.3 \leq CH_2/NHCO \leq 9.5$. Examples of the other amide component which is copolymerizable with caproamide, are laurin lactam (12-nylon), undecaneamide (11-nylon), hexamethylene sebacamide (6,10-nylon), hexamethylene adipamide (6,6-nylon), $\omega$-aminoheptanoic acid (7-nylon), $\omega$-aminononanoic acid (9-nylon), etc. Particularly effective are laurin lactam (12-nylon), hexamethylene adipamide (6,6-nylon) and $\omega$-aminononanoic acid (9-nylon). Each of these amide components may be used with at least another one thereof.

Where the ratio of the number of methylene groups to the number of amide groups, $CH_2/NHCO$, is less than 6.6, gel and hard spots tend to occur frequently. A result thereof is bad appearance but also the fact that the EVOH blend layer breaks upon high speed drawing at areas where gel and hard spots occur. This greatly detracts from the gas barrier properties. On the other hand, if the ratio of $CH_2/NHCO$ is greater than 10, the gel and hard spots occur hardly and a container formed by high speed drawing seems to be of good quality. However, it does have areas of poor transparency and the gas barrier properties are poor and vary greatly. The reason therefor probably is a number of minute pinholes.

It has now been found that even in polyamides satisfying the equation $6.6 \leq CH_2/NHCO \leq 10$, fabrication properties are not necessarily improved depending upon the brand of the nylon. As a result of extensive investigations, it has been found that good containers of a multilayered structure having good appearance, good gas barrier properties and minimum variations in the gas barrier properties can be obtained by high speed hot drawing, when the polyamides used have a melting point (temperature of the major endothermic peak by DSC (scanning speed, 10°C/min) of 110 to 180°C and a melt index of 0.1 to 10 g/10 min, preferably 0.5 to 9 g/10 min.

The amount of the polyamide added to EVOH is 5 to 30 wt%, preferably 7 to 25 wt%. When the amount added is less than 5 wt%, fabrication properties are not satisfactorily improved but cracks and variations tend to occur. On the other hand, when the amount added exceeds 30 wt%, the gas barrier properties greatly decrease so that the containers prepared therefrom have insufficient gas barrier characteristics.

Blending EVOH with the polyamide is not limited to a particular method. A suitable method comprises dry-blending EVOH with the polyamide, pelletizing the blend using a Banbury mixer, a single- or twin-screw extruder and then drying the pellets. When the blend is heterogeneous or gel and hard spots occur and disturb the blending operation, the EVOH blend layer is very likely to break and may become uneven upon hot drawing. Therefore, it is desired that an extruder having a high kneading degree be used, the opening of a hopper be sealed with $N_2$ and the extrusion be performed using an extruder at low temperature after blending while applying heat. Furthermore, it is desired that after forming the blended pellets into a sheet of 50 $\mu$m using a hot press at 220°C, the nylon particles having a diameter of 0.1 $\mu$m or less, preferably those having a diameter of 0.05 $\mu$m or less, be present in an amount of at least 50%.

Other additives (e.g. various resins, antioxidants, plasticizers and coloring agents.) can be freely used in ranges that do not impair the effect and function of the present invention, when admixed. In order to stabilize the resins against heat and prevent the occurrence of gel, the incorporation of 0.01 to 1 wt% of a hydrotalcite type compound or hindered phenol type or hindered amine type stabilizer is particularly advantageous.

The thermoplastic resin used in the present invention is drawn and formed at the temperatures defined below. Preferred examples of such resin include polypropylene resin, polystyrene resin, polyamide resin, polyvinyl chloride resin, saturated polyester resin (e.g. polyethylene terephthalate resin). Among them, polypropylene resin and polystyrene resin are most suited.

When the melting point of the EVOH and the temperature of the thermoplastic resin upon hot drawing are made X°C and Y°C, respectively, then the following equation applies:

$$X - 10°C \geqq Y \geqq X - 110°C$$

When Y is higher than (X-10)°C, EVOH softens and melts upon hot drawing so that the products can generally be formed even without incorporation of any additive. On the other hand, when Y is lower than (X-110)°C, the glass transition temperature (Tg) of the thermoplastic resin becomes lower than room temperature so that the shape of the product formed is highly unstable at room temperature and highly liable to dimensional changes, which is not useful.

The multilayered structure can be obtained by a method which comprises laminating the EVOH composition on the thermoplastic resin by an extrusion laminate method, a dry laminate method, a co-extrusion laminate method, a co-extrusion sheet preparation method (e.g. feed block or multi-manifold method), a co-extrusion pipe preparation method, a co-injection method and various solution coating methods, to give a laminate, then reheating and drawing the laminate within a temperature range lower than the melting point of EVOH using e.g. a deep draw vacuum air-pressure forming machine or a biaxially drawing blower; or a method which comprises subjecting the aforesaid laminate (sheet or film) to a biaxially drawing machine and hot drawing; or a method which comprises biaxially drawing the EVOH composition and the thermoplastic resin and drawing while co-injecting them.

Further, there is no particular limitation to the thickness of the multilayered structure. However taking formability and costs into account the ratio of the thickness of the EVOH layer to the whole thickness suitably is approximately 2 to 20%. Of the construction of the multilayered structure, the thermoplastic resin layer/EVOH composition layer/thermoplastic resin layer, the EVOH composition layer/adhesive resin layer/thermoplastic resin layer and the thermoplastic resin layer/adhesive resin layer/EVOH composition layer/adhesive resin layer/thermoplastic resin layer are representative. In addition, a recovered product of the multilayered structure according to the present invention may also be incorporated in each of these layers; alternatively, a recovering layer may be separately provided. If the thermoplastic resin layers are provided on both outer layers, the resins may be different from each other or may be the same. The adhesive resin as used herein refers to any resin which is capable of being drawn and formed at temperatures lower than the melting point of EVOH and of bonding the EVOH composition layer to the thermoplastic resin layer. Preferred adhesions are polyolefines (e.g. polyethylene, polypropylene), ethylene-vinyl acetate copolymers, ethylene-acrylic acid ester (e.g. methyl ester, ethyl ester) copolymers, having ethylenically unsaturated carboxylic acids or anhydrides thereof (e.g. maleic anhydride) added or grafted on.

In the present invention the hot drawn multilayered structure refers to containers such as cups or bottles, or sheets or films obtained by hot drawing, as described above. Further heat or heating refers to any method for allowing the multilayered structure to stand at temperatures necessary for hot drawing for a definite period of time and processing the multilayered structure so as to be thermally substantially uniform; from the viewpoint of operability a method for heating and obtaining thermal uniformity by various heaters is preferred.

The heat or heating operation may be performed at the same time as the drawing or prior thereto. Furthermore, the term drawing refers to an operation of forming the thermally uniformly heated multilayered structure into a container, a cup, a sheet or a film by e.g. a chuck, plug assist forming, vacuum air-pressure or blow. Monoaxial drawing or biaxial drawing (simultaneous or sequential) can be used. Furthermore, a drawing magnification and a drawing speed can be appropriately chosen in accordance with the intended purpose but in the present invention, high speed drawing means a method for uniformly forming a container or a film at a drawing speed (a drawing area magnification (%)/min) as high as $5 \times 10^5$ %/min or more, but the formed product is not always necessarily oriented.

While in the present invention, the moisture content of the EVOH composition layer which is a constituent of the multi-layered structure is not particularly critical during hot drawing, it preferably is in the range of from 0.01 to 10%, and more preferably of from 0.01 to 5%.

The hot drawn multilayered structure of the present invention thus obtained, is free from pinholes, cracks and localized non-uniform sections in the EVOH composition layer so that the gas barrier properties are extremely good. Consequently the multilayered structure gives extremely good containers with almost uniform gas barrier properties which are suitable for foodstuffs or for materials whose flavor is to be preserved.

The present invention will be described hereinafter in more detail making reference to the examples without being limited thereto.

## Examples

### Example 1

EVOH (EVAL-EP-F101®, manufactured by Kuraray Co., Ltd.) having an ethylene content of 31 mol%, a saponification degree of 99.4% and a melt index (MI) of 1.3 g/10 min was mixed with 15% of 12,6-nylon (melting point (mp) 155°C, MI = 4.0, $CH_2/NHCO = 7.4$) containing a caproamide unit of 49 wt%. The mixture was subjected to extrusion pelletization at 200°C in a $N_2$ flow using a twin-screw type vented 40 $\phi$ extruder. The pellets obtained were dried at 80°C for 8 hours. The pellets were subjected to a feed block type co-extrusion apparatus for forming a composite sheet of 5 layers made from 3 kinds of resins. The sheet was composed of two outermost polypropylene (Noblen MA-6®, manufactured by Mitsubishi Chemical Industry Co., Ltd.) layers of 800 $\mu$m each, two adhesive resin layers (Modec P-300F®, a maleic anhydride-modified polypropylene, manufactured by Mitsubishi Petrochemical Co., Ltd.) of 50 $\mu$m each and of the aforesaid EVOH composition layer of 50 $\mu$m as the innermost layer (center). The sheet thus obtained was subjected to vacuum air-pressure forming (drawing speed 9 x $10^5$ %/min) followed by hot forming (SPPF forming) at 155°C. The product formed was appropriately transparent and showed neither cracks nor non-uniform sections. The gas barrier properties of this container were measured at 20°C and 65% RH (10/50 Model, manufactured by Mocon Co., Ltd.); they were found to be extremely good, i.e. 0.5 cm³ x 20 $\mu$m/m² x 24 hr x 101325 Pa (atm), and to be highly uniform [R(cm³ x 20 $\mu$m/m² x 24 hr x 101325 Pa (atm)) = the maximum value - the minimum value] as the variation in the measurement data of 20 samples was as small as 0.1 cm³ x 20 $\mu$m/m² x 24 hr x 101325 Pa (atm). The container had good gas barrier properties.

### Example 2

A sheet was prepared in a manner similar to that of Example 1 except that the two outermost layers were not made from polypropylene but from polystyrene (Styrol ET-61®, manufactured by Idemitsu Petrochemical Co., Ltd.) and the adhesive resin layers were not made from Modec P-300F® but from Mersen M-5420® (maleic anhydride-modified ethylene-vinyl acetate copolymer, manufactured by Toyo Soda Co., Ltd.). The sheet was subjected to vacuum air-pressure forming (drawing speed at 9 x $10^5$ %/min) at 130°C. The product formed had good appearance and showed no cracks nor non-uniform sections. The gas barrier properties of this container were measured to be 0.6 cm³ x 20 $\mu$m/m² x 24 hr x 101325 Pa (atm) (20°C, 65% RH). The variation (R) in the barrier properties of 10 samples was as small as 0.2 cm³ x 20 $\mu$m/m² x 24 hr x 101325 Pa (atm). Consequently the container had good gas barrier properties.

### Comparative Example 1

A sheet was prepared in a manner similar to that of Example 2 except that the polyamide was only used in an amount of 4 wt% and not 15 wt%. The container thus obtained had many cracks and showed non-uniform sections in many places. Moreover the values of the gas barrier properties were as high as 5 cm³ x 20 $\mu$m/m² x 24 hr x 101325 Pa (atm) and the container could not be used.

### Comparative Example 2

A sheet was prepared in a manner similar to that of Example 2 except that 6,12-nylon (mp = 180°C, MI = 4, $CH_2/NHCO = 10.5$) containing 5 wt% of caproamide was used. The product formed had extremely good appearance and was substantially free from cracks, hard spots and non-uniform sections. However, the gas barrier properties of 20 samples on average showed values as high as 1.2 cm³ x 20 $\mu$m/m² x 24 hr x 101325 Pa (atm) and variation (R) as large as 5.3 cm³ x 20 $\mu$m/m² x 24 hr x 101325 Pa (atm). Consequently the container did not possess satisfactory gas barrier properties.

### Comparative Example 3

The forming operation was performed in a manner similar to that of Comparative Example 2 except that the forming speed of the vacuum air-pressure forming machine was greatly reduced and the drawing speed was set at $10^5$ %/min. The appearance (hard spots, cracks and non-uniform sections) of the formed product tended to show some improvement as compared to Comparative Example 2 and the gas barrier properties (on average) were 0.7 cm³ x 20 $\mu$m/m² x 24 hr x 101325 Pa (atm), showing some improvement. Moreover the variations in the measurement data tended to be reduced to 0.9 cm³ x 20 $\mu$m/m² x 24 hr x 101325 Pa (atm). This shows that formability and gas barrier properties (uniformity) greatly depend on the forming speed (drawing rate). Moreover this Comparative Example also shows that the increased forming speed is very important for obtaining a good quality product.

Comparative Example 4

The forming operation was performed in a manner similar to that of Example 2 except that 6-polyether nylon elastomer (polyoxytetramethylene copolymer, mp = 190°C, MI = 2, $CH_2/NHCO$ = 8.3) containing 61 wt% of caproamide was used. Non-uniform sections and cracks were noted in the product formed by deep drawing. While the gas barrier properties of 20 samples were found to be acceptable, as the average value measured was 1.0 $cm^3$ x 20 $\mu m/m^2$ x 24 hr x 101325 Pa (atm), the variations were as large as 4.5 $cm^3$ x 20 $\mu m/m^2$ x 24 hr x 101325 Pa (atm). Consequently the container had insufficient gas barrier properties.

Example 3

The forming operation was carried out in a manner similar to that of Example 2 except that the EVOH used had an ethylene content of 44 mol%, a saponification degree of 99.5% and a melt index (190°C) of 5.4 g/10 min (EVAL-EP-E-105®, manufactured by Kuraray Co., Ltd.). The product formed had good appearance and was free from cracks and non-uniform sections. The gas barrier properties were found to be 1.7 $cm^3$ x 20 $\mu m/m^2$ x 24 hr x 101325 Pa (atm) (20°C, 65% RH) and the variation in 20 samples was as small as 0.2 $cm^3$ x 20 $\mu m/m^2$ x 24 hr x 101325 Pa (atm). Consequently the container had good gas barrier properties.

Example 4

The forming operation was performed in a manner similar to that of Example 1 except that the nylon in the EVOH was replaced with 12,6 nylon (mp = 178°C, MI = 4.0, $CH_2/NHCO$ = 8.8) containing 25 wt% of the caproamide unit. The product formed had good appearance and was free from cracks and non-uniform sections. The gas barrier properties of this container were measured at 20°C and 65% RH. The value obtained was 0.7 $cm^3$ x 20 $\mu m/m^2$ x 24 hr x 101325 Pa (atm). Moreover, the variation [R ($cm^3$ x 20 $\mu m/m^2$ x 24 hr x 101325 Pa (atm)) = the maximum value - the minimum value)] in the gas barrier properties of 20 samples, was found to be as small as 0.2 $cm^3$ x 20 $\mu m/m^2$ x 24 hr x 101325 Pa (atm). Thus, the container was found to possess good gas barrier properties.

Example 5

The forming operation was performed in a manner similar to that of Example 2 except that the nylon in the EVOH was replaced with 6,9-nylon (mp = 165°C, MI = 6.0, $CH_2/NHCO$ = 6.7) con-

taining 35 wt% of the caproamide unit. The product formed had good appearance and was free from cracks and non-uniform sections. The gas barrier properties of this container had a value of 0.5 $cm^3$ x 20 $\mu m/m^2$ x 24 hr x 101325 Pa (atm) (20°C and 65% RH). Moreover, the variation (R) in the gas barrier properties of 20 samples was as small as 0.1 $cm^3$ x 20 $\mu m/m^2$ x 24 hr x 101325 Pa (atm). Consequently the container was found to possess good gas barrier properties.

Comparative Example 5

The forming operation was performed in a manner similar to that of Example 2 except that the nylon in the EVOH was replaced with 6,9-nylon (mp = 195°C, MI = 6.0, $CH_2/NHCO$ = 5.5) containing 80 wt% of the caproamide unit. When being formed from a sheet base, the sheet showed a number of hard spots. When this sheet was subjected to heat forming, large cracks appeared around the hard spots. The appearance of the container so prepared was not good. Nor were its gas barrier properties good as the measured value was 1.2 $cm^3$ x 20 $\mu m/m^2$ x 24 hr x 101325 Pa (atm). The variation (R) in the gas barrier properties of 20 samples was as high as 1.8 $cm^3$ x 20 $\mu m/m^2$ x 24 hr x 101325 Pa (atm). Thus, the container could not be used.

Example 6

Using a co-injectable, hot draw-blow molding machine manufactured by Nissei ASB Co. Ltd., the EVOH-nylon blended pellets used in Example 1 were formed into a container having 3 layers made of 2 kinds of resins or 5 layers made of 2 kinds of resins composed of polyester ([n] = 0.70 dl/g)-/EVOH blend product/polyester ([n] = 0.70 dl/g). The container obtained had good gas barrier properties (0.05 $cm^3$ x 20 $\mu m/m^2$ x 24 hr x 101325 Pa (atm); R = 0.01 $cm^3$ x 20 $\mu m/m^2$ x 24 hr x 101325 Pa (atm)) showing no normalities such as scoreline-like uneven thickness, non-uniform sections, cracks, gels, etc.

Comparative Example 6

The EVOH was treated as in Example 6 but was not previously blended with nylon as in Example 6. The bottle formed showed scoreline-like unevenness in thickness and non-uniform sections in many places and could not be used.

**Claims**

1. A hot drawn multilayered structure comprising a layer of an ethylene-vinyl alcohol copolymer composition comprising 70 to 95 wt% of an ethylene-vinyl alcohol copolymer having an ethylene content of 25 to 60 mol% and a saponification degree of at least 90% and 5 to 30 wt% of an aliphatic copolymer polyamide containing caproamide as a main structural unit, the ratio of the number of methylene groups to the number of amide groups satisfying the equation:

$$6.6 \leq CH_2/NHCO \leq 10$$

having a melting point of 110 to 180°C and showing a melt index of 0.1 to 10 g/10 min, and a thermoplastic resin layer provided on at least one surface of said layer, said thermoplastic resin being drawable in a hot drawing temperature range shown by the following equation:

$$X - 10°C \geq Y \geq X - 110°C$$

wherein X represents the melting point (°C) of EVOH and Y represents the hot drawing temperature.

2. A hot drawn multilayered structure as claimed in claim 1 wherein said thermoplastic resin is a polystyrene resin, a polypropylene resin, a polyvinyl chloride resin or a polyamide resin.

3. A hot drawn multilayered structure as claimed in claim 1, wherein said thermoplastic resin is a polystyrene resin.

4. A hot drawn multilayered structure as claimed in claim 1 wherein said thermoplastic resin is a polypropylene resin.

5. A hot drawn multilayered structure as claimed in claim 1 wherein said ratio of the number of methylene groups to the number of amide groups satisfies the equation $6.8 \leq CH_2/NHCO \leq 9.5$.

6. A hot drawn multilayered structure as claimed in claim 1 wherein said ratio of the number of methylene groups to the number of amide groups satisfies the equation $7.0 \leq CH_2/NHCO \leq 9.5$.

7. A hot drawn multilayered structure as claimed in claim 1 wherein said melting point of the aliphatic copolymer polyamide is 120 to 170°C.

8. A hot drawn multilayered structure as claimed in claim 1 wherein said melt index of the aliphatic copolymer polyamide is 0.5 to 9 g/10 min.

9. A hot drawn multilayered structure as claimed in claim 1 which is obtained by subjecting a co-extruded laminate to vacuum air-pressure deep drawing.

10. A hot drawn multilayered structure as claimed in claim 1 which is obtained by drawing at a drawing speed of $5 \times 10^5$ %/min.

11. A hot drawn multilayered structure as claimed in claim 1 wherein said layer of a composition comprising an aliphatic copolymer polyamide and an ethylene-vinyl alcohol copolymer is the center layer and the thermoplastic resin layers are provided on both surfaces of said center layer, optionally with an adhesive layer interposed between the center layer and the surface layers.

**Patentansprüche**

1. Warm gezogene mehrschichtige Struktur, umfassend eine Schicht aus einer Ethylenvinylalkoholcopolymerzusammensetzung, umfassend 70 bis 95 Gew.-% eines Ethylenvinylalkoholcopolymers, das einen Ethylengehalt von 25 bis 60 Mol-% und einen Verseifungsgrad von mindestens 90% besitzt, und 5 bis 30 Gew.-% eines aliphatischen Copolymerpolyamids, das Capronamid als Hauptstruktureinheit enthält, wobei das Verhältnis der Anzahl von Methylengruppen zu der Anzahl von Amidgruppen der Gleichung genügt:

$$6,6 \leq CH_2/NHCO \leq 10$$

das einen Schmelzpunkt von 110 bis 180°C besitzt und einen Schmelzindex von 0,1 bis 10 g/10 min aufweist, und eine thermoplastische Harzschicht, die auf mindestens einer Oberfläche dieser Schicht bereitgestellt wird, wobei das thermoplastische Harz in einem Temperaturbereich zum Warmziehen, der durch die nachstehende Gleichung angegeben wird:

$$X - 10°C \geq Y \geq X - 110°C$$

verstreckbar ist, wobei X den Schmelzpunkt (°C) von EVOH darstellt und Y die Temperatur zum Warmziehen wiedergibt.

2. Warm gezogene mehrschichtige Struktur nach Anspruch 1, in der das thermoplastische Harz ein Polystyrolharz, ein Polypropylenharz, ein Polyvinylchloridharz oder ein Polyamidharz ist.

3. Warm gezogene mehrschichtige Struktur nach Anspruch 1, in der das thermoplastische Harz ein Polystyrolharz ist.

4. Warm gezogene mehrschichtige Struktur nach Anspruch 1, in der das thermoplastische Harz ein Polypropylenharz ist.

5. Warm gezogene mehrschichtige Struktur nach Anspruch 1, in der das Verhältnis der Anzahl von Methylengruppen zu der Anzahl der Amidgruppen der Gleichung $6,8 \leq CH_2/NHCO \leq 9,5$ genügt.

6. Warm gezogene mehrschichtige Struktur nach Anspruch 1, in der das Verhältnis der Anzahl von Methylengruppen zu der Anzahl von Amidgruppen der Gleichung $7,0 \leq CH_2/NHCO \leq 9,5$ genügt.

7. Warm gezogene mehrschichtige Struktur nach Anspruch 1, in der der Schmelzpunkt des aliphatischen Polyamidcopolymers im Bereich von 120 bis 170 °C liegt.

8. Warm gezogene mehrschichtige Struktur nach Anspruch 1, in der der Schmelzindex des aliphatischen Polyamidcopolymers 0,5 bis 9 g/10 min beträgt.

9. Warm gezogene mehrschichtige Struktur nach Anspruch 1, die durch pneumatisches Vakuum-Tiefziehen eines extrudierten Laminats erhalten wird.

10. Warm gezogene mehrschichtige Struktur nach Anspruch 1, die durch Ziehen bei einer Ziehgeschwindigkeit von $5 \times 10^5$ %/min erhalten wird.

11. Warm gezogene mehrschichtige Struktur nach Anspruch 1, in der die Schicht einer Zusammensetzung, die ein aliphatisches Polyamidcopolymer und ein Ethylenvinylalkoholcopolymez umfaßt, die mittlere Schicht bildet und die Schichten aus thermoplastischem Harz an beiden Oberflächen der mittleren Schicht, gegebenenfalls mit einer Klebschicht, die zwischen die mittlere Schicht und die Oberflächenschichten gelegt wird, bereitgestellt werden.

**Revendications**

1. Une structure multicouche étirée à chaud comprenant une couche d'une composition de copolymère d'éthylène-alcool vinylique comprenant 70 à 95 % en poids d'un copolymère d'éthylène-alcool vinylique ayant une teneur en éthylène de 25 à 60 % molaires et un degré de saponification d'au moins 90 % et 5 à 30 % en poids d'un polyamide qui est un copolymère aliphatique contenant du capramide comme motif structural principal, le rapport du nombre des groupes méthylènes au nombre des groupes amides satisfaisant à l'équation :

$$6,6 \leq CH_2/NHCO \leq 10$$

ayant un point de fusion de 110 à 180 °C et présentant un indice de fluidité de 0,1 à 10 g/10 min, et une couche de résine thermoplastique disposée sur au moins une surface de ladite couche, ladite résine thermoplastique étant étirable dans une gamme des températures d'étirage à chaud indiquée par l'équation suivante :

$$X - 10 °C \geq Y \geq X - 110 °C$$

dans laquelle X représente le point de fusion (°C) de l'EVOH et Y représente la température d'étirage à chaud.

2. Une structure multicouche étirée à chaud selon la revendication 1, dans laquelle ladite résine thermoplastique est une résine de polystyrène, une résine de polypropylène, une résine de chlorure de polyvinyle ou une résine de polyamide.

3. Une structure multicouche étirée à chaud selon la revendication 1, dans laquelle ladite résine thermoplastique est une résine de polystyrène.

4. Une structure multicouche étirée à chaud selon la revendication 1, dans laquelle ladite résine thermoplastique est une résine de polypropylène.

5. Une structure multicouche étirée à chaud selon la revendication 1, dans laquelle ledit rapport du nombre des groupes méthylènes au nombre des groupes amides satisfait à l'équation $6,8 \leq CH_2/NHCO \leq 9,5$.

6. Une structure multicouche étirée à chaud selon la revendication 1, dans laquelle ledit rapport du nombre des groupes méthylènes au nombre des groupes amides satisfait à l'équation $7,0 \leq CH_2/NHCO \leq 9,5$.

7. Une structure multicouche étirée à chaud selon la revendication 1, dans laquelle ledit point de fusion du polyamide qui est un copolymère aliphatique est de 120 à 170 °C.

8. Une structure multicouche étirée à chaud selon la revendication 1, dans laquelle ledit indice de fluidité du polyamide qui est un copolymère aliphatique est de 0,5 à 9 g/10 min.

9. Une structure multicouche étirée à chaud selon la revendication 1, qui est obtenue en soumettant un stratifié coextrudé à un formage pneumatique profond sous vide.

10. Une structure multicouche étirée à chaud selon la revendication 1, qui est obtenue par étirage à une vitesse d'étirage de $5 \times 10^5$ %/min.

11. Une structure multicouche étirée à chaud selon la revendication 1, dans laquelle ladite couche faite d'une composition comprenant un polyamide, qui est un copolymère aliphatique, et un copolymère d'éthylène-alcool vinylique est la couche centrale et les couches de résine thermoplastique sont disposées sur les deux surfaces de ladite couche centrale, éventuellement avec une couche adhésive interposée entre la couche centrale et les couches superficielles.